# EUROPÄISCHE PATENTSCHRIFT

(11) **EP 3 049 320 B1**
(45) Veröffentlichungstag und Bekanntmachung des Hinweises auf die Patenterteilung: **19.12.2018**
(21) Anmeldenummer: 14750745.3
(22) Anmeldetag: 14.08.2014
(51) Int. Cl.: B63B 9/04

(54) **VERFAHREN ZUM VERGRÖSSERN EINES SCHIFFES UND VERGRÖSSERTES SCHIFF**
METHOD FOR EXTENDING A SHIP AND THE CORRESPONDING EXTENDED SHIP
PROCÉDÉ D'AGRANDISSEMENT D'UN NAVIRE ET LE NAVIRE AGRANDI CORRESPONDANT

(30) Priorität: 27.09.2013 EP 13004712
(43) Veröffentlichungstag der Anmeldung: 03.08.2016
(73) Patentinhaber: NSB Niederelbe Schiffahrtsgesellschaft mbH & Co. KG, 21614 Buxtehude (DE)
(72) Erfinder: PONATH, Helmut, 21614 Buxtehude (DE); MÜLLER, Lutz, 25348 Glückstadt (DE)
(74) Vertreter: Hauck Patentanwaltspartnerschaft mbB
(86) Internationale Anmeldenummer: PCT/EP2014/067422
(87) Internationale Veröffentlichungsnummer: WO 2015/043828

(56) Entgegenhaltungen:
- JP-A- S5 519 641
- JP-A- S58 209 678
- JP-A- S61 135 884
- US-A- 3 397 663

## Beschreibung

Die Erfindung bezieht sich auf ein Verfahren zum Vergrößern eines Schiffes und auf ein vergrößertes Schiff.

Panamax-Containerschiffe passen aufgrund ihrer maximalen Breite von 32,3 m, maximalen Länge von 294,3 m, und ihres Tiefganges von maximal 12,04 m durch die Schleusen des Panama-Kanals hindurch und können diesen somit passieren. Die Wirtschaftlichkeit dieser Schiffe ist jedoch auf Routen, die den Panama-Kanal nicht einbeziehen, wesentlich geringer, als bei Schiffen mit größerer Schiffsbreite. Dies beruht insbesondere darauf, dass durch den enormen Anstieg der Brennstoffpreise der Betrieb breiterer und langsamerer Schiffe, bei denen der notwendige Stabilitätsballast zugunsten der Ladung deutlich verringert ist, kosteneffizienter ist. Zudem werden nach dem Umbau des Panama-Kanals, mit dessen Fertigstellung nach 2016 gerechnet wird, größere Schiffe der Neopanamax-Klasse den Kanal passieren können, die maximale Schiffsabmessungen von 49 m Breite, 366 m Länge und maximal 15,2 m Tiefgang haben.

Bereits bekannt ist, die Ladungskapazität von Containerschiffen durch Einbau einer zusätzlichen Rumpfsektion zu vergrößern. Dem sind dadurch Grenzen gesetzt, dass der Schiffsrumpf auf Belastungen ausgelegt ist, die auf den Schiffsrumpf mit der ursprünglichen Länge einwirken. Deshalb kann eine Verlängerung des Schiffes eine aufwendige Verstärkung des Rumpfes erfordern. Die vergleichsweise niedrige Querstabilität des Schiffes wird durch die Verlängerung nicht verbessert.

Bereits bekannt ist die Schiffsverbreiterung durch Anschweißen von Hohlräume einschließenden Verbreiterungen auf die Außenseiten der Seitenwände des Schiffes auf Höhe der Wasserlinie oder darunter. Durch diese Sponsons wird die Querstabilität des Schiffes erhöht, die Ladungskapazität jedoch nicht gesteigert.

Ferner bekannt ist die Schiffsverbreiterung durch Anschweißen einer Tragstruktur mit nach außen versetzten Schiffsseitenwänden an die Außenseiten des Schiffsrumpfes. Die Tragstruktur trägt Verbreiterungen des Hauptdecks, sodass die Stellplatzkapazität an Deck erhöht wird. Unter Deck werden keine zusätzlichen Stellplätze für Container geschaffen.

Die US 3,397,663 A und JP S55 19641 A beschreiben Verfahren der Vergrößerung der Tonnage von Schiffen, bei denen der Schiffsrumpf durch mindestens eine zusätzliche hintere Schiffssektion verlängert wird, die zwischen einem verbreiterten mittleren Schiffsabschnitt und einem hinteren Schiffsabschnitt eingebaut wird.

Die Beanspruchung des Schiffsrumpfs steigt mit dem Quadrat seiner Länge, sodass die Verlängerung eine Verstärkung der Hauptsteifigkeitsverbände des Schiffes erfordert. Diese ist mit einem hohen Stahleinsatz verbunden und sehr aufwendig. Damit geht eine wesentliche Vergrößerung des Schiffsgewichts einher, sodass ein leistungsfähigerer Schiffsantrieb notwendig sein kann, für den wiederum mehr Brennstoff eingesetzt werden muss und der mehr Schadstoffe ausstößt. Die Querstabilität des Schiffes wird durch die Verlängerung tendenziell herabgesetzt, sodass infolge des Umbaus der Einsatz größerer Mengen Ballastwasser erforderlich sein kann. Dieser steigert wiederum den Aufwand für Betriebsstoff und die Freisetzung von Schadstoffen.

Die bekannten Schiffsverbreiterungen erfordern einen hohen Stahleinsatz mit entsprechender Zunahme des Eigengewichts, was sich in den Umbaukosten, Brennstoffverbrauch und entsprechenden Schadstoffemissionen niederschlägt.

Die JP S 58 209678 A beschreibt die Verbesserung der Schiffslinien und Hydrodynamik sowie die Vergrößerung der hydrostatischen Stabilität und des Volumens eines Schiffes mit einem neugebauten Vorderteil und einem Maschinenbereich eines alten Schiffsrumpfes durch Anbringen von Seitenbeplattungen oder ausgebeulten Strukturteilen seitlich am Maschinenbereich, die sich bis unter die Wasserlinie des Schiffes erstrecken.

Davon ausgehend liegt der Erfindung die Aufgabe zugrunde, ein Verfahren zur Schiffsvergrößerung zur Verfügung zu stellen, das Schiffe mit größerer Ladungskapazität und günstigerem Brennstoffverbrauch ermöglicht und mit geringeren Mengen Stahl auskommt. Zudem liegt der Erfindung die Aufgabe zugrunde, ein vergrößertes Schiff mit einer größeren Ladungskapazität, günstigerem Brennstoffverbrauch und geringeren Mengen zusätzlich verbautem Stahl zu schaffen.

Die Aufgabe wird durch ein Verfahren mit den Merkmalen von Anspruch 1 gelöst. Vorteilhafte Ausgestaltungen des Verfahrens sind in Unteransprüchen angegeben.

Gemäß dem erfindungsgemäßen Verfahren zur Schiffsvergrößerung wird
- ein Containerschiff, Conbulker, Mehrzweckschiff, Lash-Schiff oder ein anderes Schiff mit hohem Decksöffnungsgrad verbreitert, wobei
- ein den Bug umfassender vorderer Schiffsabschnitt und ein das Heck umfassender hinterer Schiffsabschnitt von einem zumindest einem Teil des Laderaums umfassenden mittleren Schiffsabschnitt abgetrennt,
- der mittlere Schiffsabschnitt in Längsrichtung in mindestens zwei Mittelschiffsteile geteilt,
- die Mittelschiffsteile in Querrichtung des Schiffes auseinandergerückt,
- zwischen den auseinandergerückten Mittelschiffsteile ein zusätzliches Mittelteil eingebaut und hierdurch ein verbreiterter mittlerer Schiffsabschnitt gebildet,
- ein verbreiterter vorderer Schiffsabschnitt vorn an den verbreiterten mittleren Schiffsabschnitt angebaut und
- der hintere Schiffsabschnitt direkt hinten an den verbreiterten mittleren Schiffsabschnitt angebaut wird.

Bei dem erfindungsgemäßen Verfahren wird durch den Einbau des zusätzlichen Mittelteils in das Schiff die Ladungskapazität sowohl an Deck als auch unter Deck erhöht. Bei einem Containerschiff können folglich wesentlich mehr zusätzliche Containerstellplätze zur Verfügung gestellt werden als bei dem bekannten Verfahren, bei dem lediglich zusätzliche Stellplätze an Deck geschaffen werden. Durch die Schiffsverbreiterung wird die Querstabilität des Schiffsrumpfes erhöht, sodass der notwendige Stabilitätsballast zugunsten der Ladung deutlich verringert wird. Hierdurch werden Brennstoffverbrauch und Schadstoffausstoß reduziert. Das Mittelteil wird in einen Bereich des Schiffes eingesetzt, der verhältnismäßig geringen Belastungen ausgesetzt ist, sodass die Schiffsverbreiterung mit einem vergleichsweise geringen Einsatz von Stahl auskommt. Dies senkt die Umbaukosten und wirkt sich ebenfalls vorteilhaft auf Brennstoffverbrauch und Schadstoffausstoß des verbreiterten Schiffes aus. Zudem werden bei der Schiffsverbreiterung die für die Festigkeit des Schiffsrumpfes maßgeblichen Schiffsseiten mit Außenhaut, Seitenlängsschott und tragendem Lukenlängssüll im mittleren Schiffsabschnitt nicht verändert, was mit hohem Materialeinsatz verbunden wäre und Beeinträchtigungen der Festigkeit zur Folge haben könnte, da diese Bauteile ein komplexes Festigkeitssystem bilden. Die Hauptfestigkeitsverbände des Schiffes werden nur am Ende des mittleren Schiffsabschnitts geschnitten, wo sie verhältnismäßig geringen Belastungen ausgesetzt sind, nicht jedoch inmitten des besonders belasteten mittleren Schiffsabschnitts. Eine Verlängerung des Schiffes kann vermieden werden oder ist so gering, dass keine aufwendigen Maßnahmen zur Erhöhung der Stabilität erforderlich sind. Der Maschinenraum mit dem Schiffsmotor, das Deckshaus, das Achterschiff, die Propeller- und Ruderanlage (Wellen- und Ruderanlage oder Ruderpropeller) sind vom Umbau nicht betroffen, sofern sie sich im hinteren Schiffsabschnitt befinden. Der Schiffsantrieb kann in der Regel unverändert beibehalten werden, da sich der Umbau nur geringfügig auf den Energiebedarf auswirkt und der Schiffsantrieb meist ohnehin für höhere Fahrleistungen ausgelegt ist. Auch ein neuer Propeller ist in der Regel nicht erforderlich, da das Schiff durch die Vergrößerung langsamer fährt.

Gemäß einer Ausgestaltung des Verfahrens wird ein verbreiterter vorderer Schiffsabschnitt vorn an den verbreiterten mittleren Schiffsabschnitt angebaut, indem der abgetrennte vordere Schiffsabschnitt und der mittlere Schiffsabschnitt in Längsrichtung auseinandergerückt werden und zwischen den abgetrennten vorderen Schiffsabschnitt und den verbreiterten mittleren Schiffsabschnitt eine nach hinten sich verbreiternde zusätzliche Schiffs sektion eingebaut wird.

Durch die zwischen vorderem Schiffsabschnitt und mittlerem Schiffsabschnitt eingebaute zusätzliche Schiffssektion kann weitere Ladungskapazität an Deck und unter Deck geschaffen werden. Dadurch, dass sich die zusätzliche Schiffssektion nach hintern verbreitert, erhält das verbreiterte Schiff eine strömungsgünstige Form, die sich günstig auf den Brennstoffverbrauch und den Schadstoffausstoß auswirkt. Bei dieser Ausgestaltung wird das Schiff geringfügig verlängert.

Gemäß einer weiteren Ausgestaltung wird die zusätzliche Schiffssektion vorfabriziert und zwischen den vorderen Schiffsabschnitt und den mittleren Schiffsabschnitt eingebaut. Hierdurch werden die Produktionsabläufe weiter verbessert.

Gemäß einer weiteren Ausgestaltung werden der vordere Schiffsabschnitt und der mittlere Schiffsabschnitt vor dem Einsetzen der zusätzlichen Schiffssektion auf einen die Länge der vorderen Schiffssektion übersteigenden Abstand auseinander gerückt und nach dem Einsetzen der vorderen Schiffssektion zusammengerückt, sodass sie an die vordere Schiffssektion anstoßen, und werden danach mit dieser verbunden. Hierdurch wird der Einbau der zusätzlichen Schiffssektion weiter erleichtert.

Gemäß einer weiteren Ausgestaltung werden die Seiten- und Bodenwände der zusätzlichen Schiffssektion vorn mit den Seiten- und Bodenwänden des vorderen Schiffsabschnittes und hinten mit den Seiten- und Bodenwänden des verbreiterten mittleren Schiffsabschnittes verbunden. Hierdurch werden strömungsgünstige Übergänge vom vorderen Schiffsabschnitt zum mittleren Schiffsabschnitt hergestellt.

Gemäß einer anderen Ausgestaltung wird der vordere Schiffsabschnitt in Längsrichtung in mindestens zwei Vorderschiffsteile getrennt, die Vorderschiffsteile in Querrichtung des Schiffes auseinandergerückt, zwischen die auseinandergerückten Vorderschiffsteile ein zusätzliches vorderes Mittelteil eingebaut und hierdurch ein verbreiterter vorderer Schiffsabschnitt gebildet, der vorn an den verbreiterten mittleren Schiffsabschnitt angebaut wird. Das umgebaute Schiff hat ein insgesamt vom hinteren Schiffsabschnitt bis zur Bugspitze erstrecktes eingebautes Mittelteil. Der Bug kam beim Umbau strömungstechnisch angepasst werden. Hierdurch erhält das verbreiterte Schiff eine strömungsgünstige Form, wobei eine Verlängerung des Schiffes gänzlich vermieden werden kann.

Gemäß einer Ausgestaltung erfolgt der Einbau eines zusätzlichen Mittelteils in den mittleren Schiffsabschnitt und der Einbau eines zusätzlichen vorderen Mittelteils in den vorderen Schiffsabschnitt getrennt und werden die Mittelteile erst bei Anbau des verbreiterten vorderen Schiffsabschnitts an den verbreiterten mittleren Schiffsabschnitt miteinander verbunden. Gemäß einer anderen Ausgestaltung ist das zusätzliche Mittelteil eine zusammenhänge Sektion, die sich über die gesamte Länge des mittleren und vorderen Schiffsabschnittes erstreckt und werden die Mittelschiffsteile und die Vorderschiffsteile an das Mittelteil angebaut und hierbei der verbreiterte vordere Schiffsabschnitt an den verbreiterten mittleren Schiffsabschnitt angebaut.

Gemäß einer anderen Ausgestaltung wird ein gegenüber dem abgetrennten vorderen Schiffsabschnitt verbreiterter vorderer Schiffsabschnitt neu hergestellt und vorn an dem verbreiterten mittleren Schiffsabschnitt angebaut. Bei dieser Ausgestaltung wird der vordere Schiffsabschnitt mit dem Bug völlig neu gebaut. Dies ermöglicht eine Optimierung des verbreiterten vorderen Schiffsabschnittes, sodass dieser eine besonders strömungsgünstige Form aufweist.

Gemäß einer bevorzugten Ausgestaltung wird der vordere Schiffsabschnitt vor dem Laderaum vom mittleren Schiffsabschnitt abgetrennt. Hierdurch kann der Großteil des Laderaums oder der gesamte Laderaum verbreitert werden. Gemäß einer weiteren Ausgestaltung wird der vordere Schiffsabschnitt einschließlich des Kollisionsschottes und vor dem nachfolgenden Querschott vom mittleren Schiffsabschnitt abgetrennt. Das Kollisionsschott schließt nach dem Umbau den verbreiterten und verlängerten Laderaum vorne ab, falls der abgetrennte vordere Schiffsabschnitt verbreitert und vorn an den verbreiterten mittleren Schiffsabschnitt angebaut wird.

Ferner wird die Aufgabe durch ein Verfahren mit den Merkmalen von Anspruch 6 gelöst. Vorteilhafte Ausgestaltungen des Verfahrens sind in Unteransprüchen angegeben.

Gemäß dem erfindungsgemäßen Verfahren zur Schiffsvergrößerung wird
- ein Containerschiff, Conbulker, Mehrzweckschiff, Lash-Schiff oder ein anderes Schiff mit hohem Decksöffnungsgrad verbreitert, wobei
- ein das Heck umfassender hinterer Schiffsabschnitt von einem zumindest einen Teil des Laderaums umfassenden mittleren Schiffsabschnitt abgetrennt wird,
- der mittlere Schiffsabschnitt und ein damit vorn verbundener, den Bug umfassender vorderer Schiffsabschnitt in Längsrichtung in mindestens zwei Schiffsteile geteilt wird,
- die Schiffsteile in Querrichtung des Schiffes auseinandergerückt werden,
- zwischen den auseinandergerückten Schiffsteilen ein zusätzliches Mittelteil eingebaut und hierdurch ein verbreiterter mittlerer und vorderer Schiffsabschnitt gebildet wird und
- der hintere Schiffsabschnitt direkt an den verbreiterten mittleren Schiffsabschnitt angebaut wird.

Bei diesem Verfahren wird nach dem Abtrennen des hinteren Schiffsabschnittes das gesamte Restschiff bestehend aus mittlerem Schiffsabschnitt und vorderem Schiffsabschnitt in Längsrichtung in mindestens zwei Schiffsteile geteilt und zwischen die Schiffsteile ein zusätzliches Mittelteil eingebaut, wodurch das Restschiff insgesamt verbreitert wird. Der hintere Schiffsabschnitt wird wiederum direkt hinten an den verbreiterten mittleren Schiffsabschnitt angebaut. Auch bei diesem Verfahren wird eine Schiffsverbreiterung erreicht, ohne dass eine Verlängerung des Schiffes erforderlich ist. Das umgebaute Schiff hat ein insgesamt vom hinteren Schiffsabschnitt bis zur Bugspitze erstrecktes eingebautes Mittelteil. Der Bug kann beim Umbau strömungstechnisch angepasst werden.

Gemäß einer weiteren Ausgestaltung wird der hintere Schiffsabschnitt vor dem Maschinenraum vom mittleren Schiffsabschnitt abgetrennt. Bei dieser Ausgestaltung wird der Maschinenraum durch den Umbau nicht berührt. Gemäß einer weiteren Ausgestaltung wird der hintere Schiffsabschnitt einschließlich des Frontschotts des Maschinenraums hinter dem vorgeordneten Querschott vom mittleren Schiffsabschnitt abgetrennt. Der Maschinenraum ist auch beim Umbau durch das Frontschott geschlossen und nach dem Umbau trennt das Frontschott den Maschinenraum vom vergrößerten Laderaum ab. Gemäß einer bevorzugten Ausgestaltung wird der hintere Schiffsabschnitt einschließlich Deckshaus vom mittleren Schiffsabschnitt abgetrennt. Bei dieser Ausgestaltung wird das Deckshaus durch den Umbau nicht berührt.

Gemäß einer bevorzugten Ausgestaltung wird der mittlere Schiffsabschnitt und/oder der vordere Schiffsabschnitt entlang mindestens einer durch die Laderäume verlaufenden Schnittlinie in Längsrichtung in zwei Teile geteilt.

Gemäß einer Ausgestaltung wird der mittlere Schiffsabschnitt und/oder der vordere Schiffsabschnitt in einem Abstand von der Längsmittelachse des Schiffes in mindestens zwei Teile getrennt. Auf der Längsmittelachse weisen Schiffe einen verstärkten Kielbereich auf, der vielfach an der Innenseite mit einem zentralen Rohrtunnel versehen ist, durch den Kabel- und Rohrleitungssysteme verlaufen. Ein Eingriff in den Rohrtunnel kann bei dieser Vorgehensweise vermieden werden. Das zusätzliche Mittelteil wird vorzugsweise entsprechend dem ursprünglichen Kielbereich verstärkt, um den neuen Kielbereich zu bilden. Gemäß einer anderen Ausgestaltung wird der mittlere Schiffsabschnitt und/oder der vordere Schiffsabschnitt auf der Längsmittelachse des Schiffes getrennt. Vorzugsweise wird das zusätzliche Mittelteil mit Verstärkungen entsprechend dem ursprünglichen Kielbereich versehen, sodass das umgebaute Schiff einen verbreiterten verstärkten Kielbereich aufweist. Gemäß einer anderen Ausgestaltung wird der mittlere Schiffsabschnitt und/oder der vordere Schiffsabschnitt auf beiden Seiten in einem Abstand von der Längsmittelachse in Längsrichtung in drei Teile getrennt. Das hierbei abgetrennte Mittelteil wird entnommen und durch ein breiteres, zusätzliches Mittelteil ersetzt. Das zusätzliche Mittelteil weist vorzugsweise im Kielbereich Verstärkungen auf. Der Umbau ist zwar aufwendiger, führt jedoch zu Material- und Gewichtseinsparungen, falls der Kielbereich nur dort verstärkt wird, wo dies erforderlich ist.

Gemäß einer weiteren Ausgestaltung ist das zusätzliche Mittelteil und/oder das vordere zusätzliche Mittelteil mindestens eine vorfabrizierte Sektion, die zwischen die beiden Mittelschiffsteile des mittleren Schiffsabschnitts eingebaut wird. Hierdurch werden die Produktionsabläufe verbessert.

Gemäß einer weiteren Ausgestaltung werden die beiden Mittelschiffsteile und/oder die beiden Vorderschiffsteile weiter auseinandergerückt, als das zusätzliche Mittelteil bereit ist, und werden die beiden Mittelschiffsteile und/oder die beiden Vorderschiffsteile nach dem Einsetzen des zusätzlichen Mittelteils wieder zusammengerückt, sodass sie an das eingesetzte Mittelteil anstoßen und werden die Mittelschiffsteile und/oder die beiden Vorderschiffsteile dann mit dem zusätzlichen Mittelteil verbunden. Dies erleichtert den Einbau des zusätzlichen Mittelteils.

Gemäß einer weiteren Ausgestaltung werden nach dem Abtrennen des hinteren Schiffsabschnittes der hintere Schiffsabschnitt und der mittlere Schiffsabschnitt auseinandergerückt und nach der Verbreitung des mittleren Schiffsabschnitts der hintere Schiffsabschnitt und der verbreiterte mittlere Schiffsabschnitt wieder zusammengerückt und dann miteinander verbunden. Hierdurch wird das Auseinanderrücken der Mittelschiffsteile und der Einbau des zusätzlichen Mittelteils erleichtert.

Gemäß einer weiteren Ausgestaltung werden die hinteren Enden der Seitenwände des verbreiterten mittleren Schiffsabschnittes über Verbindungswände mit dem hinteren Schiffsabschnitt verbunden. Die Verbindungswände steigern die Festigkeit des Verbindungsbereiches zwischen verbreitertem mittlerem Schiffsabschnitt und hinterem Schiffsabschnitt. Zusätzlich können die Verbindungswände den verbreiterten mittleren Schiffsabschnitt hinten beidseitig abdichten. Gemäß einer weiteren Ausgestaltung nimmt der Abstand der Verbindungswände voneinander nach hinten ab. Bevorzugt werden die Verbindungswände in einem spitzen Winkel zur Längsachse des Schiffes eingebaut, sodass sie sich nach hinten und auf die Seitenwände des hinteren Schiffsabschnittes zu erstrecken. Hierdurch wird ein allmählicher, strömungsgünstiger Übergang vom mittleren Schiffsabschnitt zum hinteren Schiffsabschnitt geschaffen.

Gemäß einer weiteren Ausgestaltung werden die Hohlräume zwischen den Verbindungswänden und dem Schiffskörper unten durch beidseitige Verbreiterungen des Schiffsbodens geschlossen. Weiterhin vorzugsweise werden die seitlichen Verbindungswände unten zu den beidseitigen Verbreiterungen des Schiffsbodens hin gebogen. Vorzugsweise wird die Biegung der Verbindungswände vorn und hinten an den gebogenen Übergang von den Seitenwänden zum Schiffsboden im Bereich des mittleren Schiffsabschnittes und des hinteren Schiffsabschnittes angepasst. Gemäß einer weiteren Ausgestaltung werden die Hohlräume zwischen den Verbindungswänden und dem Schiffskörper oben durch Verbreiterungen des Hauptdecks geschlossen.

Gemäß einer Ausgestaltung werden an den verbreiterten mittleren Schiffsabschnitt in Verlängerung der oberen Gurtung seiner Seitenwände nach hinten Balkone angebaut, die den hinteren Schiffsabschnitt zumindest in einem vorderen Abschnitt seitlich einfassen. Die obere Gurtung wird auch als "Box Girder" bezeichnet. Die Balkone werden vorzugsweise fest mit dem hinteren Schiffsabschnitt verbunden, vorzugsweise verschweißt. Die Balkone klammern den hinteren Schiffsabschnitt ein und verstärken damit die Schiffsstruktur.

Gemäß einer Ausgestaltung wird das Schiff auf dem Schergang mit Versteifungen versehen. Gemäß einer Ausgestaltung sind die Versteifungen Flacheisen. Gemäß einer weiteren Ausgestaltung werden die Versteifungen auf dem Hauptschergang angebracht. Gemäß einer weiteren Ausgestaltung werden die Versteifungen auf dem mittleren Schiffsabschnitt angebracht. Die Versteifungen kompensieren höhere Belastungen des Schiffes aufgrund der vergrößerten Länge.

Gemäß einer weiteren Ausgestaltung wird die Back des Schiffes verlängert. Die Verlängerung der Back wird gemäß einer bevorzugten Ausgestaltung durch Anschweißen zusätzlicher Bleche hergestellt.

Gemäß einer weiteren Ausgestaltung wird der Bugwulst abgetrennt und durch einen auf die Form des vergrößerten Schiffes optimierten Bugwulst ersetzt. Hierdurch werden Brennstoffverbrauch und Schadstoffausstoß verringert.

Gemäß einer weiteren Ausgestaltung wird die Brückennock verbreitert, sodass ihre Breite der Breite des verbreiterten mittleren Schiffsabschnittes entspricht. Die verbreiterte Brückennock ist vorteilhaft für Anlegemanöver nutzbar.

Gemäß der Erfindung wird ein Containerschiff, ein ConBulker, ein Mehrzweckschiff, ein Lash-Schiff oder ein anderes Schiff mit hohem Decköffnungsgrad vergrößert. Das Verfahren ist vorteilhaft insbesondere bei Schiffen mit hohem Decköffnungsgrad anwendbar, weil sich die vom Umbau betroffenen Strukturen dieser Schiffstypen besonders gut für den Umbau eignen.

Gemäß einer weiteren Ausgestaltung werden bei einem Containerschiff oder einem ConBulker oder einem Mehrzweckschiff der verbreiterte mittlere Schiffsabschnitt und/oder die zusätzliche Schiffs sektion mit zusätzlichen Lukensüllen versehen und mit zusätzlichen Lukendeckeln abgedeckt.

Zur Verlagerung der Schiffsabschnitte werden vorzugsweise herkömmliche hydraulische oder pneumatische Schwerlasttransportsysteme mit Gleitschlitten verwendet. Alternativ können die Schiffsabschnitte z.B. im Dock aufgeschwommen, verlagert und dann wieder abgesetzt werden.

Für das Trennen der Schiffsabschnitte voneinander und das Teilen des mittleren Schiffsabschnittes werden vorzugsweise Schneidbrenneranlagen verwendet.

Für die Verbindung der verschiedenen Schiffsstrukturen insbesondere beim Einbau bzw. Anbau des zusätzlichen Mittelteils, der zusätzlichen Schiffssektion, des hinteren Schiffsabschnittes, des verbreiterten vorderen Schiffsabschnitts, der Verbindungswände und der Verbreiterungen der Schiffsbodens und des Hauptdecks werden vorzugsweise Schweißverfahren verwendet. Nietverbindungen sind ebenfalls möglich.

Das Mittelteil umfasst insbesondere zusätzliche Abschnitte des Doppelbodens, von Querschotten und ggf. einen Längsschott. Bei einem Containerschiff umfasst es zudem zusätzliche Abschnitte von Quersüllen und von Galerien. Die Galerien halten die Führungen für Container, die beispielsweise durch Winkelprofile gebildet sind. Der zusätzliche Abschnitt des Doppelbodens, von Querschotten und ggf. Quersüllen und Galerien werden mit den entsprechenden Strukturteilen der auseinandergerückten Mittelschiffsteile verbunden, um diese zu vergrößern. Das Längsschott wird vorzugsweise mit Querschotten verbunden, beispielsweise mit dem Kollisionsschott des Bugs und dem Frontschott des Maschinenraums.

Das zusätzliche Schiffssegment umfasst insbesondere einen zusätzlichen Abschnitt des Doppelbodens und zusätzliche Abschnitte der Seitenwände des Schiffes sowie einen zusätzlichen Abschnitt des Hauptdecks. Hinzu kommen können zusätzliche Querschotte und Abschnitte von Längsschotten. Ferner zusätzliche Luken und Quersülle sowie Galerien.

Ferner wird die Aufgabe durch ein Schiff gemäß Anspruch 14 gelöst. Vorteilhafte Ausgestaltungen des Schiffes sind in den Unteransprüchen angegeben

Das erfindungsgemäße vergrößerte Containerschiff, Conbulker, Mehrzweckschiff, Lash-Schiff oder ein anderes Schiff mit hohem Decksöffnungsgrad hat
- einen zumindest einen Teil des Laderaums umfassenden mittleren Schiffsabschnitt, der durch ein in Längsrichtung des Schiffes erstrecktes, eingebautes Mittelteil verbreitert ist,
- einen verbreiterten vorderen Schiffsabschnitt, der vorn an den verbreiterten mittleren Schiffsabschnitt angebaut ist,
- einen das Heck umfassenden hinteren Schiffsabschnitt, der weniger breit als der verbreiterte mittlere Schiffsabschnitt und direkt an diesen angebaut ist,
- dadurch gekennzeichnet, dass an dem verbreiterten mittleren Schiffsabschnitt in Verlängerung der oberen Gurtung seiner Seitenwände nach hinten Balkone angebaut sind, die den hinteren Schiffsabschnitt zumindest in seinem vorderen Abschnitt seitlich einfassen.

Das Schiff weist die im Zusammenhang mit der Erläuterung des Verfahrens zur Herstellung des Schiffes angeführten Vorteile auf. Dies gilt auch für die nachfolgenden Ausgestaltungen.

Gemäß einer weiteren Ausgestaltung umfasst der verbreiterte vordere Schiffsabschnitt eine sich nach hinten verbreiternde zusätzliche Schiffssektion, die zwischen einem den Bug umfassenden vorderen Schiffsabschnitt und dem verbreiterten mittleren Schiffsabschnitt eingebaut ist.

Gemäß einer alternativen Ausgestaltung ist der verbreiterte vordere Schiffsabschnitt durch ein in Längsrichtung des Schiffes erstrecktes, eingebautes zusätzliches vorderes Mittelteil verbreitert.

Gemäß einer weiteren Ausgestaltung umfasst der hintere Schiffsabschnitt den Maschinenraum mit dem Schiffsmotor, das Deckshaus, das Achterschiff und die Ruder- und Propelleranlage.

Gemäß einer weiteren Ausgestaltung umfasst der vordere Schiffsabschnitt das Kollisionsschott und/oder umfasst der hintere Schiffsabschnitt das Frontschott des Maschinenraums und/oder das Deckshaus.

Gemäß einer Ausgestaltung ist das Mittelteil und/oder das vordere Mittelteil versetzt zur Längsmittelachse des Schiffes eingebaut.

Gemäß einer weiteren Ausgestaltung sind die hinteren Enden der Seitenwände des verbreiterten mittleren Schiffsabschnittes über Verbindungswände mit dem hinteren Schiffsabschnitt verbunden, deren Abstand voneinander nach hinten allmählich abnimmt.

Gemäß einer weiteren Ausgestaltung sind die Hohlräume zwischen den Verbindungswänden und dem Schiffskörper unten durch beidseitige Verbreiterungen des Schiffsbodens geschlossen und/oder sind die Hohlräume zwischen den Verbindungswänden und dem Schiffskörper oben durch Verbreiterungen des Hauptdecks geschlossen.

Gemäß einer weiteren Ausgestaltung sind an dem verbreiterten mittleren Schiffsabschnitt in Verlängerung der oberen Gurtung seiner Seitenwände nach hinten Balkone angebaut, die den hinteren Schiffsabschnitt zumindest in einem vorderen Abschnitt seitlich einfassen. Die Balkone sind bevorzugt fest mit dem hinteren Schiffsabschnitt verbunden.

Gemäß einer weiteren Ausgestaltung ist der Schergang mit Versteifungen versehen. Gemäß einer weiteren Ausgestaltung ist der Hauptdeckschergang mit Versteifungen versehen. Gemäß einer weiteren Ausgestaltung befinden sich die Versteifungen im mittleren Schiffsabschnitt. Gemäß einer bevorzugten Ausgestaltung sind die Versteifungen Flacheisen. Vorzugsweise sind die Versteifungen angeschweißt.

Gemäß einer weiteren Ausgestaltung hat das Schiff einen auf die Form des verbreiterten Schiffes optimierter Bugwulst.

Gemäß einer weiteren Ausgestaltung hat das Schiff eine verbreiterte Brückennock, die auf die Breite des verbreiterten mittleren Schiffsabschnittes abgestimmt ist.

Gemäß einer weiteren Ausgestaltung weist die Back Verlängerungen nach hinten auf.

Die Erfindung wird nachfolgend anhand der anliegenden Zeichnungen eines erfindungsgemäßen Schiffes und verschiedener Umbauphasen näher erläutert. In den Zeichnungen zeigen:
- Fig. 1: ein herkömmliches Schiff mit Verbreiterungen durch Sponsons in einem Querschnitt;
- Fig. 2: ein herkömmliches Schiff mit Verbreiterungen und zusätzlichen Containerstandplätzen an Deck in einem Querschnitt;
- Fig. 3: ein erfindungsgemäßes Schiff mit eingebautem Mittelteil im Laderaum in einem Querschnitt;
- Fig. 4: dasselbe Schiff in Seitenansicht;
- Fig. 5: dasselbe Schiff in der Draufsicht;
- Fig. 6: Innenboden desselben Schiffes im Verbindungsbereich von mittlerem und hinterem Schiffsabschnitt in einer vergrößerten Detailansicht;
- Fig. 7: Hauptdeck desselben Schiffes im Verbindungsbereich von mittlerem und hinterem Schiffsabschnitt in vergrößerter Detailansicht;
- Fig. 8: Hauptdeck desselben Schiffes im Verbindungsbereich von vorderem und mittlerem Schiffsabschnitt in vergrößerter Detailansicht;
- Fig. 9: mittlerer Schiffsabschnitt desselben Schiffes in einem Querschnitt;
- Fig. 10: mittlerer Schiffsabschnitt desselben Schiffes nach dem Teilen in Längsrichtung und Auseinanderrücken der beiden Mittelschiffsteile im Querschnitt;
- Fig. 11: verbreiterter mittlerer Schiffsabschnitt nach dem Einbau des Mittelteils in einem Querschnitt;
- Fig. 12: Schiff mit den hinteren Schiffsabschnitt einfassenden Balkonen in einer Perspektivansicht schräg von unten und von der Seite.

Bei der nachfolgenden Erläuterung verschiedener Schiffe sind übereinstimmend bezeichnete Bauteile mit denselben Bezugsziffern versehen.

Ferner sind die durch Umbau veränderten Bereiche der Schiffe dunkel getönt.

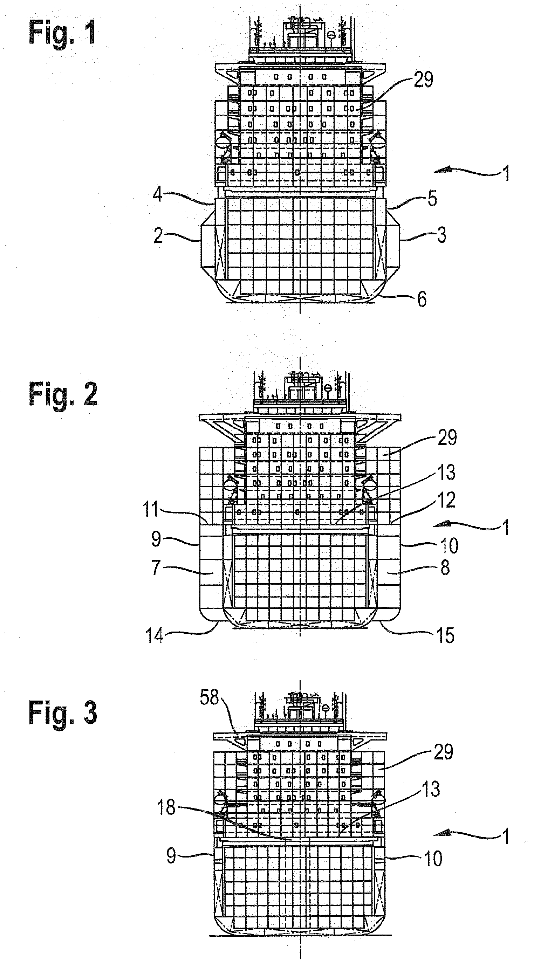

In Fig. 1 bis 3 ist jeweils ein Panmax-Containerschiff mit einer ursprünglichen Ladungskapazität von 4.300 Standardcontainern (Twenty-Foot Equivalent Unit / TEU) gezeigt.

Gemäß Fig. 1 ist das Schiff 1 durch Anbau von Sponsons 2, 3 an die Außenseiten der Seitenwände 4, 5 des Schiffsrumpfes 6 verbreitert. Die Sponsons erstrecken sich oberhalb und unterhalb der Wasserlinie. Durch diese Verbreiterung wird die Querstabilität des Schiffes 1 erhöht und der Bedarf an Ballastwasser verringert. Zusätzliche Ladungskapazität wird hierdurch nicht geschaffen.

Fig. 2 zeigt eine andere Verbreiterung desselben Schiffes 1. Dabei sind außen an die Seitenwände 4, 5 des Schiffsrumpfes 6 Strukturen 7, 8 angebaut, die außen mit zusätzlichen Seitenwänden 9, 10 versehen sind. Oben tragen die Strukturen 7, 8 Verbreiterungen 11, 12 des Hauptdecks 13 und unten sind sie durch zusätzliche Bodenwände 14, 15 geschlossen. Hierdurch werden beidseitig des ursprünglichen Schiffsrumpfes 6 Standflächen für weitere Container an Deck geschaffen. Im Beispiel erfordert die Schiffsverbreiterung den Einsatz von ca. 5.000 Tonnen Stahl. Die Ladungskapazität des Schiffes wird hierdurch um ca. 450 Standardcontainer erhöht.

Fig. 3 zeigt ein erfindungsgemäß verbreitertes Schiff 1. Im mittleren Schiffsabschnitt 16 ist auf der Längsmittelachse 17 des Schiffes 1 ein Mittelteil 18 eingebaut. Hierdurch hat das Schiff zusätzliche Containerstellplätze an und unter Deck. Die Verbreiterung des mittleren Schiffsabschnittes erfordert den Einsatz von ca. 2.000 Tonnen Stahl. Hierdurch wird die Ladungskapazität um ca. 650 Standardcontainer erhöht.

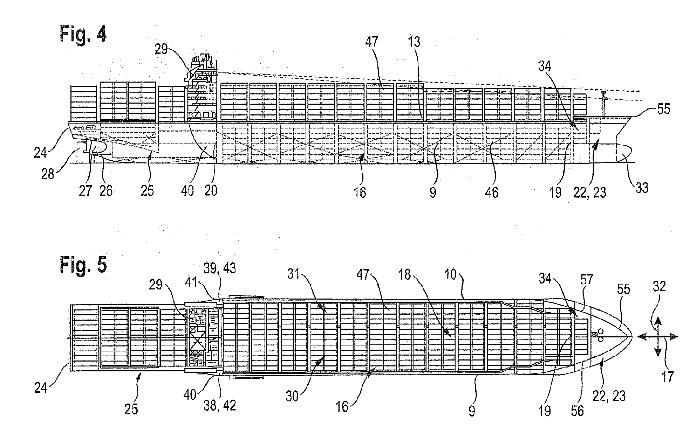

Gemäß Fig. 4 und 5 endet der verbreiterte mittlere Schiffsabschnitt 16 vorn hinter dem Kollisionsschott 18 des Bugs und hinten vor dem Frontschott 20 des Maschinenraums 21, in dem der Schiffsmotor angeordnet ist. Dies beruht darauf, dass bei der Verbreiterung des Schiffes 1 zunächst der Bug 22 einschließlich des Kollisionsschottes 19 als vorderer Schiffsabschnitt 23 und ein vom Heck 24 bis zum Frontschott 20 reichender hinterer Schiffsabschnitt 25 vom mittleren Schiffsabschnitt 16 abgetrennt wurden. Beim Abtrennen des hinteren Schiffsabschnittes 25 wird nicht in Maschinenraum 21, Maschine, Wellenanlage 26, Propeller 27, Ruderanlage 28 und Deckshaus 29 eingegriffen. Anschließend wurde der vordere Schiffsabschnitt 23 in Längsrichtung um etwa 8 m nach vorne gerückt und der hintere Schiffsabschnitt 25 in Längsrichtung um einen kleinen Abstand von z.B. 0,50 m nach hinten gerückt.

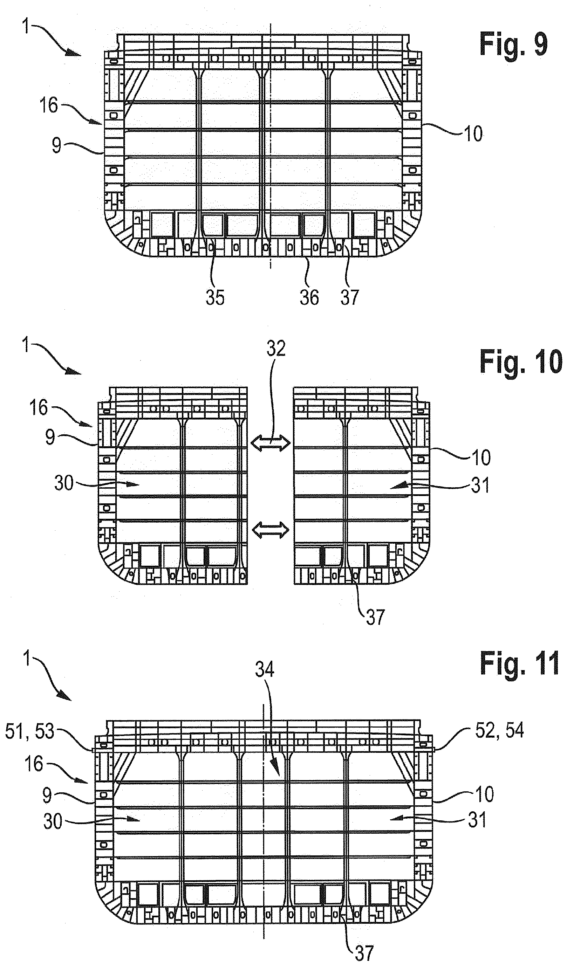

Danach wurde der mittlere Schiffsabschnitt 16 in Längsrichtung in zwei Mittelschiffsteile 30, 31 geteilt und die beiden Mittelschiffsteile 30, 31 in Querrichtung 32 des Schiffs 1 auseinandergerückt. Das Teilen des mittleren Schiffsabschnittes 16 und Auseinanderrücken der Mittelschiffsteile 30, 31 ist in den Fig. 9 bis 11 gezeigt. Danach wurde das Mittelteil 18 in einer oder mehreren Sektionen zwischen die Mittelschiffsteile 30, 31 gesetzt und diese bis zur Anlage an das Mittelteil 18 zusammengerückt. Danach wurden die Mittelschiffsteile 30, 31 mit dem Mittelteil 18 verschweißt.

Ferner wurde gemäß Fig. 4 der Bugwulst durch einen an die neue Bugform angepassten neuen Bugwulst 33 ersetzt.

Des Weiteren wurde eine sich nach hinten verbreiternde zusätzliche Schiffssektion 34 zwischen den mittleren Schiffsabschnitt 16 und den vorderen Schiffsabschnitt 23 eingesetzt. Mittlerer Schiffsabschnitt 16, zusätzliche Schiffssektion 34 und vorderer Schiffsabschnitt 23 wurden zusammengerückt und miteinander verschweißt. Durch die zusätzliche Schiffssektion 34 wird die Lücke zwischen vorderem Schiffsabschnitt 23 und mittlerem Schiffsabschnitt 16 geschlossen und ein glatter, strömungsgünstiger Übergang zwischen diesen Abschnitten hergestellt.

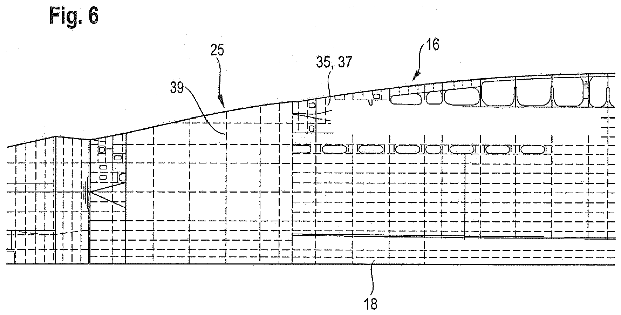

Ferner wurde der hintere Schiffsabschnitt 25 an den verbreiterten mittleren Schiffsabschnitt 16 herangerückt. Gemäß Fig. 6 wurden der Schiffsinnenboden 35 und dementsprechend der Schiffsaußenboden 36 des Schiffsbodens 37 am vorderen Ende des hinteren Schiffsabschnittes 25 mit Verbreiterungen 38 versehen, die sich nach vorn allmählich erweitern. Die Verbreiterungen 38, 39 des Schiffsbodens 37 schließen vorne glatt an die äußeren Ränder des Schiffsbodens 37 des verbreiterten mittleren Schiffsabschnittes 16 an und laufen hinten in einem Abschnitt des Schiffsbodens 37 des hinteren Schiffsabschnittes 25 mit der ursprünglichen Breite aus.

Ferner wurde der hintere Schiffsabschnitt 25 mit dem vorbereiteten mittleren Schiffsabschnitt 16 verschweißt. An die hinteren Enden der Seitenwände 9, 10 des verbreiterten mittleren Schiffsabschnittes 16 wurden gemäß Fig. 4 und 5 Verbindungswände 40, 41 angesetzt, deren Abstand voneinander nach hinten abnimmt und die an den hinteren Enden mit den Seitenwänden 9, 10 des hinteren Schiffsabschnittes 25 verschweißt sind.

Die Verbreiterungen 38, 39 des Schiffsbodens 37 schließen den Hohlraum zwischen den Verbindungswänden 40, 41 und dem Schiffsrumpf an der Unterseite ab.

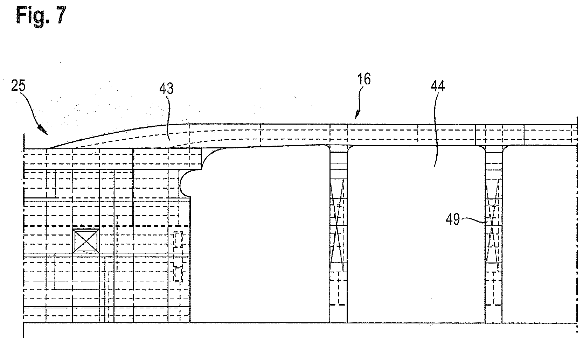

Gemäß Fig. 7 wurden am vorderen Ende des hinteren Schiffsabschnittes 25 beidseitig Verbreiterungen 42, 43 des Hauptdecks 13 angebaut, die vorne mit den äußeren Randbereichen des Hauptdecks des mittleren Schiffsabschnittes 16 verbunden sind und deren Breite nach hinten abnimmt, bis sie in dem ursprünglichen Hauptdeck 13 des hinteren Schiffsabschnittes 25 auslaufen. Die Verbreiterungen 42, 43 des Hauptdecks 16 schließen den Hohlraum zwischen den Verbindungswänden 40, 41 und dem Schiffskörper oben ab.

Durch die Verbindungswände 40, 41 und die Verbreiterungen 38, 39 des Schiffsbodens 37 und des Hauptdecks 13 wird der Verbindungsbereich zwischen dem mittleren Schiffsabschnitt 16 und dem hinteren Schiffsabschnitt 25 verfestigt. Zudem werden die vom hinteren Schiffsabschnitt 25 überstehenden Randbereiche des mittleren Schiffsabschnittes 16 geschlossen und ein gleichmäßiger, strömungsgünstiger Übergang zwischen dem mittleren Schiffsabschnitt 16 und dem hinteren Schiffsabschnitt 25 hergestellt.

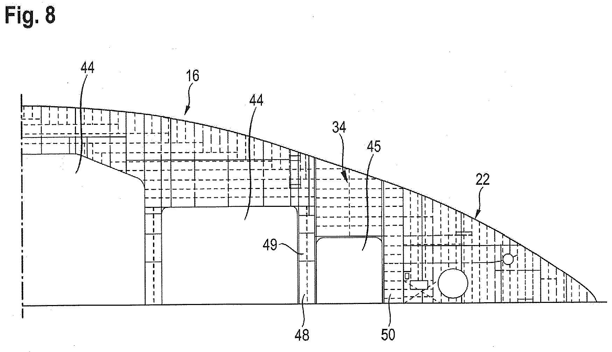

Im Bereich des Mittelteils 18 und der zusätzlichen Schiffssektion 34 werden die Luken 44 vergrößert bzw. zusätzliche Luken 45 geschaffen und im Laderaum 46 und an Deck 13 weitere Stellplätze für Container 47 zur Verfügung gestellt. Dort sind Verlängerungen 48 der Lukensülle 49 bzw. zusätzliche Lukensülle 50 eingebaut, die zusätzliche Lukendeckel tragen. Dies ist insbesondere in Fig. 8 gezeigt.

Gemäß Fig. 11 ist der Hauptschergang 51, 52 des Schiffes 1 auf beiden Seiten mit Versteifungen 53, 54 versehen.

Aus Fig. 5 ist ersichtlich, dass die Back 55 des Schiffes auf beiden Seiten nach hinten Verlängerungen 56, 57 aufweist.

Fig. 3 zeigt, dass die Brückennock 58 beidseitig verbreitert ist, so dass ihre Breite der Breite des verbreiterten mittleren Schiffsabschnitts 16 entspricht.

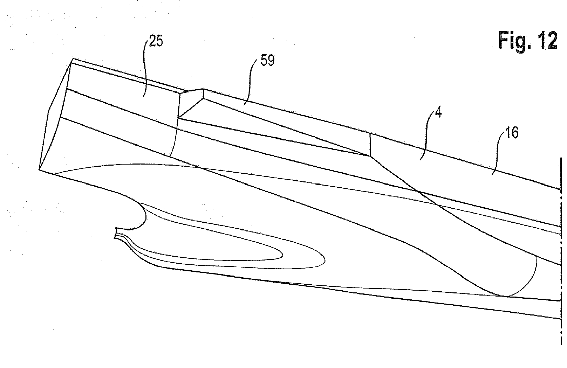

Gemäß Fig. 12 sind in Verlängerung der oberen Gurtung (Box Girder) der Seitenwände 4, 5 an den mittleren Schiffsabschnitt 16 Balkone 59 angebaut, die den hinteren Schiffsabschnitt im vorderen Bereich seitlich einfassen. Die Balkone 59 sind hinten an das hintere Ende des verbreiterten mittleren Schiffsabschnitts 16 und seitlich an den hinteren Schiffsabschnitt 25 angeschweißt. Sie verstärken die Schiffsstruktur.

Die unterschiedliche Wirtschaftlichkeit der Schiffe von Fig. 1 bis 3 wird insbesondere bei Vergleich des Energy Efficiency Transport Index (EETI) deutlich. Dieser setzt den Verbrauch an Brennstoff ins Verhältnis zur Ladung bestehend aus mit jeweils 14 Tonnen beladenen Containern und Betriebsdauer. Der Vergleichswert in Kilogramm Marinedieselöl (MDO)/TEU 14 x Tag beträgt bei dem Schiff der ersten Figur 30,4, bei dem Schiff der zweiten Figur 29,9 und bei dem erfindungsgemäßen Schiff 26,2. Der Vergleichswert des erfindungsgemäßen Schiffes ist ähnlich den Vergleichswerten von Schiffsneubauten mit von vornherein verbreitertem Schiffsrumpf.

### Bezugszeichenliste

- 1: Schiff
- 2, 3: Sponson
- 4, 5: Seitenwände
- 6: Schiffsrumpf
- 7, 8: Strukturen
- 9, 10: Seitenwände
- 11, 12, 38, 39, 42, 43: Verbreiterungen
- 13: Deck
- 14, 15: Bodenwände
- 16: mittlerer Schiffsabschnitt
- 17: Längsmittelachse
- 18: Mittelteile
- 19: Kollisionsschott
- 20: Frontschott
- 21: Maschinenraum
- 22: Bug
- 23: vorderer Schiffsabschnitt
- 24: Heck
- 25: hinterer Schiffsabschnitt
- 26: Wellenanlage
- 27: Propeller
- 28: Ruderanlage
- 29: Deckshaus
- 30, 31: Mittelschiffsteile
- 32: Bugwulst
- 34: zusätzliche Schiffssektion
- 35: Schiffsinnenboden
- 36: Schiffsaußenboden
- 37: Schiffsboden
- 40, 41: Verbindungswände
- 44, 45: Luken
- 46: Laderaum
- 47: Stellplätze
- 48, 56, 57: Verlängerungen
- 49, 50: Lukensülle
- 51, 52: Schergang
- 53, 54: Versteifungen
- 55: Back
- 58: Brückennock
- 59: Balkon

## Patentansprüche

1. Verfahren zur Schiffsvergrößerung, bei dem
• ein Containerschiff (1), Conbulker, Mehrzweckschiff, Lash-Schiff oder ein anderes Schiff mit hohem Decksöffnungsgrad verbreitert wird, wobei
• ein den Bug (22) umfassender vorderer Schiffsabschnitt (23) und ein das Heck (24) umfassender hinterer Schiffsabschnitt (25) von einem zumindest einen Teil des Laderaums (46) umfassenden mittleren Schiffsabschnitt (16) abgetrennt werden,
• der mittlere Schiffsabschnitt (16) in Längsrichtung (17) in mindestens zwei Mittelschiffsteile (30, 31) geteilt wird,
• die Mittelschiffsteile (30, 31) in Querrichtung (32) des Schiffes (1) auseinandergerückt werden,
• zwischen den auseinandergerückten Mittelschiffsteile (30, 31) ein zusätzliches Mittelteil (18) eingebaut und hierdurch ein verbreiterter mittlerer Schiffsabschnitt (16) gebildet wird,
• ein verbreiterter vorderer Schiffsabschnitt (23, 34) vorn an den verbreiterten mittleren Schiffsabschnitt (16) angebaut wird
**dadurch gekennzeichnet, dass**
• der hintere Schiffsabschnitt (25) direkt hinten an den verbreiterten mittleren Schiffsabschnitt (16) angebaut wird.

2. Verfahren nach Anspruch 1, bei dem ein verbreiterter vorderer Schiffsabschnitt (23, 34) vorn an den verbreiterten mittleren Schiffsabschnitt (16) angebaut wird, indem der abgetrennte, vordere Schiffsabschnitt (23) und der mittlere Schiffsabschnitt (16) in Längsrichtung (17) auseinandergerückt werden und zwischen den abgetrennten vorderen Schiffsabschnitt (23) und den verbreiterten mittleren Schiffsabschnitt (16) eine nach hinten sich verbreiternde zusätzliche Schiffssektion (34) eingebaut wird.

3. Verfahren nach Anspruch 1, bei dem der vordere Schiffsabschnitt (23) in Längsrichtung in mindestens zwei Vorderschiffsteile getrennt wird, die Vorderschiffsteile in Querrichtung des Schiffes (1) auseinandergerückt werden, zwischen die auseinandergerückten Vorderschiffsteile ein zusätzliches vorderes Mittelteil (18) eingebaut und hierdurch ein verbreiterter vorderer Schiffsabschnitt (23) gebildet wird, der vorn an den verbreiterten mittleren Schiffsabschnitt (16) angebaut wird.

4. Verfahren nach Anspruch 1, bei dem ein im Vergleich zum abgetrennten vorderen Schiffsabschnitt (23) verbreiterter vorderer Schiffsabschnitt neu hergestellt und vorn an den verbreiterten mittleren Schiffsabschnitt (16) angebaut wird.

5. Verfahren nach einem der Ansprüche 1 bis 4, bei dem der vordere Schiffsabschnitt (23) einschließlich des Kollisionsschotts (19) vor dem nachfolgenden Querschott vom mittleren Schiffsabschnitt (16) abgetrennt wird.

6. Verfahren zur Schiffsvergrößerung, bei dem
• ein Containerschiff (1), Conbulker, Mehrzweckschiff, Lash-Schiff oder ein anderes Schiff mit hohem Decksöffnungsgrad verbreitert wird, wobei
• ein das Heck (24) umfassender hinterer Schiffsabschnitt (25) von einem zumindest einen Teil des Laderaums (46) umfassenden mittleren Schiffsabschnitt (16) abgetrennt wird,
• der mittlere Schiffsabschnitt (16) und ein damit vorn verbundener, den Bug (22) umfassender vorderer Schiffsabschnitt (23) in Längsrichtung (17) in mindestens zwei Schiffsteile (30, 31) geteilt wird,
• die Schiffsteile in Querrichtung (32) des Schiffes (1) auseinandergerückt werden,
• zwischen den auseinandergerückten Schiffsteilen (30, 31) ein zusätzliches Mittelteil (18) eingebaut und hierdurch ein verbreiterter mittlerer und vorderer Schiffsabschnitt (16, 23) gebildet wird,
**dadurch gekennzeichnet, dass**
• der hintere Schiffsabschnitt (25) direkt hinten an den verbreiterten mittleren Schiffsabschnitt (16) angebaut wird.

7. Verfahren nach einem der Ansprüche 1 bis 6, bei dem der hintere Schiffsabschnitt (25) einschließlich des Frontschotts (20) des Maschinenraums (21) hinter dem vorgeordneten Querschott von dem mittleren Schiffsabschnitt (16) abgetrennt wird.

8. Verfahren nach einem der Ansprüche 1 bis 7, bei dem der mittlere Schiffsabschnitt (16) und/oder der vordere Schiffsabschnitt (23) in einem Abstand von Längsmittelachse (17) des Schiffes (1) in mindestens zwei Teile (30, 31) geteilt wird.

9. Verfahren nach einem der Ansprüche 1 bis 8, bei dem das zusätzliche Mittelteil (18) und/oder das vordere zusätzliche Mittelteil mindestens eine vorfabrizierte Sektion ist, die zwischen die beiden Mittelschiffsteile (30, 31) des mittleren Schiffsabschnittes (16) und/oder die beiden Vorderschiffsteile der vorderen Schiffsabschnittes (23) eingebaut wird.

10. Verfahren nach einem der Ansprüche 1 bis 9, bei dem die hinteren Enden der Seitenwände (9, 10) des verbreiterten mittleren Schiffsabschnittes (16) über Verbindungswände (40, 41) mit dem hinteren Schiffsabschnitt (25) verbunden werden, deren Abstand voneinander nach hinten abnimmt und / oder bei dem Hohlräume zwischen den Verbindungswänden (40, 41) und dem Schiffskörper unten durch beidseitige Verbreiterungen (38, 39) des Schiffsbodens (37) geschlossen werden und/oder bei dem Hohlräume zwischen den Verbindungswänden (40, 41) und dem Schiffskörper oben durch Verbreiterungen (42, 43) des Hauptdecks (13) geschlossen werden.

11. Verfahren nach einem der Ansprüche 1 bis 10, bei dem an den verbreiterten mittleren Schiffsabschnitt (16) in Verlängerung der oberen Gurtung seiner Seitenwände (4, 5) nach hinten Balkone (59) angebaut werden, die den hinteren Schiffsabschnitt (25) zumindest in einem vorderen Abschnitt seitlich einfassen und/oder bei dem der Schergang (51, 52) mit Versteifungen (53, 54) versehen wird.

12. Verfahren nach einem der Ansprüche 1 bis 11, bei dem die Back (55) nach hinten mit Verlängerungen (56, 57) versehen wird und/oder bei dem Bugwulst abgetrennt und durch einen auf die Form des verbreiterten Schiffes optimierten Bugwulst (33) ersetzt wird und/oder bei dem die Brückennock (58)verbreitert wird, so dass ihre Breite der Breite des verbreiterten mittleren Schiffsabschnittes (16) entspricht.

13. Verfahren nach einem der Ansprüche 1 bis 12, bei dem der hintere Schiffsabschnitt (25) durch Verschweißen oder mittels Nietverbindungen direkt an den verbreiterten mittleren Schiffsabschnitt (16) angebaut wird.

14. Vergrößertes Containerschiff (1), Conbulker, Mehrzweckschiff, Lash-Schiff oder ein anderes Schiff mit hohem Decksöffnungsgrad mit
• einem zumindest einen Teil des Laderaums (46) umfassenden mittleren Schiffsabschnitt (16), der durch ein in Längsrichtung (17) des Schiffes (1) erstrecktes, eingebautes Mittelteil (18) verbreitert ist,
• einem verbreiterten, vorderen Schiffsabschnitt (23), der vorn an dem verbreiterten mittleren Schiffsabschnitt (16) angebaut ist,
• ein das Heck (24) umfassender hinterer Schiffsabschnitt (25), der weniger breit als der verbreiterte mittlere Schiffsabschnitt (16) ist, direkt an den verbreiterten mittleren Schiffsabschnitt (16) angebaut ist,
• **dadurch gekennzeichnet, dass** an dem verbreiterten mittleren Schiffsabschnitt (16) in Verlängerung feiner oberen Gurtung seiner Seitenwände nach hinten Balkone (59) angebaut sind, die den hinteren Schiffsabschnitt (23) zumindest in einem vorderen Abschnitt seitlich einfassen.

15. Schiff nach Anspruch 14, bei dem der verbreiterte vordere Schiffsabschnitt (23) eine sich nach hinten verbreiternde zusätzliche Schiffssektion (34) umfasst, die zwischen einem den Bug (22) umfassenden vorderen Schiffsabschnitt (23) und dem verbreiterten mittleren Schiffsabschnitt (16) eingebaut ist.

16. Schiff nach Anspruch 14, bei dem der verbreiterte vordere Schiffsabschnitt (23) durch ein in Längsrichtung des Schiffes erstrecktes, eingebautes vorderes Mittelteil verbreitert ist.

17. Schiff nach einem der Ansprüche 14 bis 16, bei dem das Mittelteil (18) und/oder das vordere Mittelteil versetzt zur Längsmittelachse (17) des Schiffes eingebaut ist.

18. Schiff nach einem der Ansprüche 14 bis 17, bei dem die hinteren Enden der Seitenwände (9, 10) des verbreiterten mittleren Schiffsabschnittes (16) über Verbindungswände (40, 41) mit dem hinteren Schiffsabschnitt (25) verbunden sind, deren Abstand voneinander nach hinten abnimmt und/oder bei dem Hohlräume zwischen den Verbindungswänden (40, 41) und dem Schiffskörper unten durch beidseitige Verbreiterungen (38, 39) des Schiffbodens (37) geschlossen sind und/oder bei dem Hohlräume zwischen den Verbindungswänden (40, 41) und dem Schiffskörper oben durch Verbreiterungen (42, 43) des Hauptdecks (13) geschlossen sind.

19. Schiff nach einem der Ansprüche 14 bis 18, bei dem ein Schergang (51, 52) Versteifungen (53, 54) aufweist.

20. Schiff nach einem der Ansprüche 14 bis 19, das einen auf den verbreiterten Mittelabschnitt (16) des Schiffes (1), die zusätzliche Schiffssektion (34) und den Übergangsbereich zwischen verbreiterten mittleren Schiffsabschnitt (16) und schlankem hinterem Schiffsabschnitt (25) abgestimmten Bugwulst (33) aufweist und/oder bei dem die Breite der Brückennock (58) auf die Breite des verbreiterten mittleren Schiffsabschnittes (16) abgestimmt ist und/oder bei dem die Back (55) nach hinten Verlängerungen (56, 57) aufweist.

21. Schiff nach einem der Ansprüche 14 bis 20, bei dem der hintere Schiffsabschnitt (25) durch Verschweißen oder mittels Nietverbindungen direkt an den verbreiterten mittleren Schiffsabschnitt (23) angebaut ist.

## Claims

1. A method to enlarge a ship, wherein:
• a container ship (1), conbulker, multipurpose ship, lash ship or another ship with a large open deck is widened, wherein
• a front ship section (23) comprising the bow (22) and a rear ship section (25) comprising the stern (24) are separated from a middle ship section (16) comprising at least part of the cargo space (46),
• the middle ship section (16) is divided in the longitudinal direction (17) into at least two middle ship parts (30, 31),
• The middle ship parts (30, 31) are moved apart in the transverse direction (32) out of the ship (1),
• an additional middle part (18) is installed between the moved-apart middle ship parts (30, 31) to form a wider, middle ship section (16),
• a widened, front ship section (23, 34) is mounted on the front of the widened middle ship section (16),
**characterized in that**
• the rear ship section (25) is mounted directly on the rear of the widened middle ship section (16).

2. The method according to claim 1, wherein a widened front ship section (23, 34) is mounted on the front of the widened middle ship section (16) in that the separated front ship section (23) and middle ship section (16) are moved apart from each other in a longitudinal direction (17), and an additional ship section (34) which widens to the rear is installed between the separated front ship section (23) and widened middle ship section (16).

3. The method according to claim 1, wherein the front ship section (23) is separated in a longitudinal direction into at least two front ship parts, the front ship parts are moved apart in the transverse direction of the ship (1), an additional front middle part (18) is installed between the moved-apart front ship parts and thereby forms a widened front ship section (23) which is mounted on the front of the widened middle ship section (16).

4. The method according to claim 1, wherein a new front ship section which is wider than the separated front ship section (23) is manufactured and mounted on the front of the widened middle ship section (16).

5. The method according to one of claims 1 to 4, wherein the front ship section (23), including the collision bulkhead (19) in front of the subsequent transverse bulkhead, is separated from the middle ship section (16).

6. A method to enlarge a ship, wherein:
• a container ship (1), conbulker, multipurpose ship, lash ship or another ship with a large open deck is widened, wherein
• a rear ship section (25) comprising the stern (24) is separated from a middle ship section (16) comprising at least part of the cargo space (46),
• the middle ship section (16) and a front ship section (23) comprising the hull (22) and connected to the front of the middle ship section is divided into at least two ship parts (30, 31) in the longitudinal direction (17),
• the ship parts are moved apart from each other in the transverse direction (32) of the ship (1),
• an additional middle part (18) is installed between the moved-apart ship parts (30, 31) to form a wider, middle and front ship section (16, 23),
**characterized in that**
• the rear ship section (25) is mounted directly on the rear of the widened middle ship section (16).

7. The method according to one of claims 1 to 6, wherein the rear ship section (25), including the front bulkhead (20) of the engine room (21) behind the preceding transverse bulkhead, is separated from the middle ship section (16).

8. The method according to one of claims 1 to 7, wherein the middle ship section (16) and/or the front ship section (23) is divided into at least two parts (30, 31) at a distance from the longitudinal middle axis (17) of the ship (1).

9. The method according to one of claims 1 to 8, wherein the additional middle part (18) and/or the front additional middle part comprises at least one prefabricated section which is installed between the two middle ship parts (30, 31) of the middle ship section (16), and/or the two front ship parts of the front ship section (23).

10. The method according to one of claims 1 to 9, wherein the rear ends of the side walls (9, 10) of the widened middle ship section (16) are connected to the rear ship section (25) by means of connecting walls (40, 41) whose distance from each other gradually decreases toward the rear, and/or wherein the chambers between the connecting walls (40, 41) and the ship's body are closed at the bottom by widenings (38, 39) of the ship floor (37) on both sides, and/or the chambers between the connecting walls (40, 41) and the ship's body are closed at the top by widenings (42, 43) of the main deck (13).

11. The method according to one of claims 1 to 10, wherein balconies (59) are mounted on the widened middle ship section (16) as an extension of the top engirding of its side walls (4, 5) to the rear which enclose the rear ship section (25), at least at a front section, and/or wherein the sheer strake (51, 52) is provided with reinforcements (53, 54).

12. The method according to one of claims 1 to 11, wherein the forecastle (55) is provided with extensions (56, 57) on both sides to the rear, and/or the bulbous bow is removed and replaced with a bulbous bow (33) optimized to the shape of the enlarged ship, and/or wherein the bridge wing (58) is widened so that its width corresponds to the width of the widened middle ship section (16).

13. The method according to one of claims 1 to 12, wherein the rear ship section (25) is mounted directly on the widened middle ship section (16) by welding or by means of riveted connections.

14. An enlarged container ship (1), conbulker, multipurpose ship, lash ship or another ship with a large open deck, with
• a middle ship section (16), comprising at least part of the cargo space (46), which is widened by an installed middle part (18) extending in the longitudinal direction (17) of the ship (1),
• a widened front ship section (23) that is mounted on the front of the widened middle ship section (16),
• a rear ship section (25) which comprises the stern (24), is less wide than the widened middle section ship section (16) and is mounted directly thereon,
**characterized in that**
• balconies (59) are mounted on the widened middle ship section (16) as an extension of a top engirding of its side walls to the rear which enclose the rear ship section (23), at least at a front section.

15. The ship according to claim 14, wherein the widened front ship section (23) comprises an additional ship section (34) which widens toward the rear and is installed between a front ship section (23) comprising the bow (22), and the widened middle ship section (16).

16. The ship according to claim 14, wherein the widened front ship section (23) is widened by an installed front middle section extending in the longitudinal direction of the ship.

17. The ship according to one of claims of 14 to 16, wherein the middle part (18) and/or the front middle part is installed offset relative to the longitudinal middle axis (17) of the ship.

18. The ship according to one of claims 14 to 17, wherein the rear ends of the side walls (9, 10) of the widened middle ship section (16) are connected to the rear ship section (25) by means of connecting walls (40, 41) whose distance from each other gradually decreases toward the rear, and/or wherein the chambers between the connecting walls (40, 41) and the ship's body are closed at the bottom by widenings (38, 39) of the ship floor (37) on both sides, and/or the chambers between the connecting walls (40, 41) and the ship's body are closed at the top by widenings (42, 43) of the main deck (13).

19. The ship according to one of claims 14 to 18, wherein a sheer strake (51, 52) has reinforcements (53, 54).

20. The ship according to one of claims 14 to 19 which has an enlarged bow (33) adapted to the widened middle section (16) of the ship (1), the additional ship section (34) and the transitional area between the widened middle ships section (16) and the slender rear ship section (25), and/or wherein the width of the bridge wing (58) is adjusted to the width of the widened middle ship section (16), and/or wherein the forecastle (55) has extensions (56, 57) to the rear.

21. The ship according to one of claims 14 to 20, wherein the rear ship section (25) is mounted directly on the widened middle ship section (23) by welding or by means of riveted connections.

## Revendications

1. Procédé d'agrandissement de bateau, dans lequel
• un porte-conteneurs (1), porte-conteneurs vraquier, navire polyvalent, navire porte-barges du type Lash ou un autre bateau à haut coefficient d'ouverture de pont est élargi, dans lequel
• une section de bateau avant (23) comprenant la proue (22) et une section de bateau arrière (25) comprenant la poupe (24) sont séparées par une section de bateau centrale (16) comprenant au moins une partie de la cale à marchandises (46),
• la section de bateau centrale (16) est divisée dans la direction longitudinale (17) en au moins deux parties de corps milieu (30, 31),
• les parties de corps milieu (30, 31) sont écartées l'une de l'autre dans la direction transversale (32) du bateau (1),
• une partie centrale (18) supplémentaire est insérée entre les parties de corps milieu (30, 31) écartées l'une de l'autre et une section de bateau centrale (16) élargie est ainsi formée,
• une section de bateau avant (23, 34) élargie est montée par devant sur la section de bateau centrale (16) élargie,
**caractérisé en ce que**
• la section de bateau arrière (25) est montée juste derrière sur la section de bateau centrale (16) élargie.

2. Procédé selon la revendication 1, dans lequel une section de bateau avant élargie (23, 34) est montée par devant sur la section de bateau centrale (16) élargie, tandis que la section de bateau avant séparée (23) et la section de bateau centrale (16) sont écartées l'une de l'autre dans la direction longitudinale (17) et qu'un tronçon de bateau supplémentaire (34) s'élargissant vers l'arrière est inséré entre la section de bateau avant (23) séparée et la section de bateau centrale (16) élargie.

3. Procédé selon la revendication 1, dans lequel la section de bateau avant (23) est séparée en au moins deux parties de bateau avant dans la direction longitudinale, les parties de bateau avant sont écartées l'une de l'autre dans la direction transversale du bateau (1), une partie centrale avant (18) supplémentaire est insérée entre les parties de bateau avant écartées et une section de bateau avant (23) élargie est ainsi formée, qui est montée par devant sur la section de bateau centrale (16) élargie.

4. Procédé selon la revendication 1, dans lequel une section de bateau avant élargie par rapport à la section de bateau avant (23) séparée est fabriquée à l'état neuf et est montée par devant sur la section de bateau centrale (16) élargie.

5. Procédé selon l'une des revendications 1 à 4, dans lequel la section de bateau avant (23) y compris la cloison d'abordage (19) est séparée de la section de bateau centrale (16) en amont de la cloison transversale postérieure.

6. Procédé d'agrandissement de bateau, dans lequel
• un porte-conteneurs (1), porte-conteneurs vraquier, navire polyvalent, navire porte-barges du type Lash ou un autre bateau à haut coefficient d'ouverture de pont est élargi, dans lequel
• une section de bateau arrière (25) comprenant la poupe (24) est séparée par une section de bateau centrale (16) comprenant au moins une partie de la cale à marchandises (46),
• la section de bateau centrale (16) et une section de bateau avant (23) comprenant la proue (22) reliée à elle par devant est divisée dans la direction longitudinale (17) en au moins deux parties de bateau (30, 31),
• les parties de bateau sont écartées l'une de l'autre dans la direction transversale (32) du bateau (1),
• une partie centrale (18) supplémentaire est insérée entre les parties de bateau (30, 31) écartées l'une de l'autre et une section de bateau avant et centrale (16, 23) élargie est ainsi formée,
**caractérisé en ce que**
• la section de bateau arrière (25) est montée juste derrière sur la section de bateau centrale (16) élargie.

7. Procédé selon l'une des revendications 1 à 6, dans lequel la section de bateau arrière (25) y compris la cloison frontale (20) de la salle des machines (21) est séparée de la section de bateau centrale (16) derrière la cloison transversale disposée en amont.

8. Procédé selon l'une des revendications 1 à 7, dans lequel la section de bateau centrale (16) et/ou la section de bateau avant (23) sont divisées en au moins deux parties (30, 31) à une distance de l'axe médian longitudinal (17) du bateau (1).

9. Procédé selon l'une des revendications 1 à 8, dans lequel la partie centrale (18) supplémentaire et/ou la partie centrale supplémentaire avant sont au moins un tronçon préfabriqué, qui est inséré entre les deux parties de corps milieu (30, 31) de la section de bateau centrale (16) et/ou les deux parties de bateau avant de la section de bateau avant (23).

10. Procédé selon l'une des revendications 1 à 9, dans lequel les extrémités arrière des parois latérales (9, 10) de la section de bateau centrale (16) élargie sont reliées à la section de bateau arrière (25) par des parois de liaison (40, 41), dont l'écartement mutuel diminue vers l'arrière et/ou dans lequel des espaces creux entre les parois de liaison (40, 41) et le corps de bateau sont fermés en bas par des élargissements bilatéraux (38, 39) du fond de cale (37) et/ou dans lequel des espaces creux entre les parois de liaison (40, 41) et le corps de bateau sont fermés en haut par des élargissements (42, 43) du pont principal (13).

11. Procédé selon l'une des revendications 1 à 10, dans lequel des balcons (59) sont montés sur la section de bateau centrale (16) élargie dans le prolongement de la membrure supérieure de ses parois latérales (4, 5) vers l'arrière, qui bordent latéralement la section de bateau arrière (25) au moins dans une section antérieure et/ou dans lequel la virure de carreau (51, 52) est pourvue de renforts (53, 54).

12. Procédé selon l'une des revendications 1 à 11, dans lequel le gaillard d'avant (55) est pourvu de prolongements (56, 57) vers l'arrière et/ou dans lequel le bulbe d'étrave est détaché et remplacé par un bulbe d'étrave (33) optimisé pour épouser la forme du bateau élargi et/ou dans lequel l'aileron de passerelle (58) est élargi, de sorte que sa largeur correspond à la largeur de la section de bateau centrale (16) élargie.

13. Procédé selon l'une des revendications 1 à 12, dans lequel la section de bateau arrière (25) est montée par soudage ou au moyen d'assemblages rivés directement sur la section de bateau centrale (16) élargie.

14. Porte-conteneurs (1), porte-conteneurs vraquier, navire polyvalent, navire du type Lash ou un autre bateau à haut coefficient d'ouverture de pont, ayant été agrandi et présentant
• une section de bateau centrale (16) comprenant au moins une partie de la cale à marchandises (46), et qui est élargie par une partie centrale (18) insérée s'étendant dans la direction longitudinale (17) du bateau (1),
• une section de bateau avant (23) élargie, qui est montée par devant sur la section de bateau centrale (16) élargie,
• une section de bateau arrière (25) comprenant la poupe (24), qui est moins large que la section de bateau centrale (16) élargie et est montée directement sur la section de bateau centrale (16) élargie,
• **caractérisé en ce que** des balcons (59) sont montés sur la section de bateau centrale (16) élargie dans le prolongement d'une membrure supérieure de ses parois latérales vers l'arrière, qui bordent latéralement la section de bateau arrière (23) au moins dans une section antérieure.

15. Bateau selon la revendication 14, dans lequel la section de bateau avant (23) élargie comprend un tronçon de bateau (34) supplémentaire s'élargissant vers l'arrière, qui est inséré entre une section de bateau avant (23) comprenant la proue (22) et la section de bateau centrale (16) élargie.

16. Bateau selon la revendication 14, dans lequel la section de bateau avant (23) élargie est agrandie par une section de bateau centrale insérée s'étendant dans la direction longitudinale du bateau.

17. Bateau selon l'une des revendications 14 à 16, dans lequel la partie centrale (18) et/ou la partie centrale avant est insérée en décalage par rapport à l'axe médian longitudinal (17) du bateau.

18. Bateau selon l'une des revendications 14 à 17, dans lequel les extrémités arrière des parois latérales (9, 10) de la section de bateau centrale (16) élargie sont reliées à la section de bateau arrière (25) par des parois de liaison (40, 41), dont l'écartement mutuel diminue vers l'arrière et/ou dans lequel des espaces creux entre les parois de liaison (40, 41) et le corps de bateau sont fermés en bas par des élargissements bilatéraux (38, 39) du fond de cale (37) et/ou dans lequel des espaces creux entre les parois de liaison (40, 41) et le corps de bateau sont fermés en haut par des élargissements (42, 43) du pont principal (13).

19. Bateau selon l'une des revendications 14 à 18, dans lequel une virure de carreau (51, 52) comporte des renforts (53, 54).

20. Bateau selon l'une des revendications 14 à 19, qui comporte un bulbe d'étrave (33) adapté à la section centrale (16) élargie du bateau (1), au tronçon de bateau (34) supplémentaire et à la zone de transition entre la section de bateau centrale (16) élargie et la section de bateau arrière (25) étroite et/ou dans lequel la largeur de l'aileron de passerelle (58) est adaptée à la largeur de la section de bateau centrale (16) élargie et/ou dans lequel le gaillard d'avant (55) comporte des prolongements (56, 57) vers l'arrière.

21. Bateau selon l'une des revendications 14 à 20, dans lequel la section de bateau arrière (25) est montée par soudage ou au moyen d'assemblages rivés directement sur la section de bateau centrale (23) élargie.
